# EUROPÄISCHE PATENTANMELDUNG

(11) **EP 3 892 448 A1**
(43) Veröffentlichungstag der Anmeldung: **13.10.2021**
(21) Anmeldenummer: 21166527.8
(22) Anmeldetag: 01.04.2021
(51) Int. Cl.: B29C 65/02, B29C 65/48, B29C 65/50, B29C 65/52

(54) **FÜGEVERFAHREN UND BAUGRUPPE FÜR EIN LUFTFAHRZEUG**

(30) Priorität: 07.04.2020 DE 102020109740
(71) Anmelder: Airbus (S.A.S.), 31700 Blagnac (FR)
(72) Erfinder: Metzner, Christian, 82024 Taufkirchen (DE); Beier, Uwe, 82024 Taufkirchen (DE); Meer, Thomas, 82024 Taufkirchen (DE)
(74) Vertreter: KASTEL Patentanwälte PartG mbB

(57) **Zusammenfassung**

Zum Verbessern der Charakteristika oder ermöglichen von bislang unmöglichen Verbindungen zwischen thermoplastischen und duromeren Bauteilen (12, 14) wird ein Multi-Material-Fügeverfahren vorgeschlagen, bei dem ein thermoplastischer Verbindungsbereich (16) auf dem thermoplastischen Bauteil (12) ausgebildet wird. Der Verbindungsbereich (16) wird mittels Interdiffusion an das duromere Bauteil (14) angeschlossen. Dafür wird das noch unausgehärtete zweite Bauteil (14) mit dem Verbindungsbereich (16) in Kontakt gebracht und Wärme zugeführt. Es entsteht eine Interdiffusionsschicht (26), die das zweite Bauteil (14) und den Verbindungsbereich (16) fest miteinander verbindet und damit das erste Bauteil (12) mit dem zweiten Bauteil (14) fügt.

## Beschreibung

Die Erfindung betrifft ein Fügeverfahren zum Fügen eines, vorzugsweise faserverstärkten, ersten Bauteils mit einem faserverstärkten, zweiten Bauteil. Ferner betrifft die Erfindung eine Baugruppe für ein Luftfahrzeug.

Faserverstärkte Bauteile kommen aufgrund vielfältiger Vorzüge in der Luftfahrt zum Einsatz. Um größerer Baugruppen herzustellen können übliche Fügeverfahren, wie etwa Nieten, Kleben, Schweißen und Interdiffusionsfügen verwendet werden. Ein Beispiel für filmbasiertes Interdiffusionsfügen (engl. film interdiffusion joining, FIDJ) ist aus EP 3 124 208 A1 bekannt.

Einige der bekannten Verfahren können einen hohen Fertigungsaufwand verursachen. Des Weiteren sind nicht alle Verfahren für jede Art von Materialpaarung geeignet. Insbesondere kann es wünschenswert sein, die Verbindung an die gewünschte Funktion der zu verbindenden Bauteile anzupassen, was üblicherweise über die Geometrie und die Materialeigenschaften der Bauteile eingestellt wird. Dies kann bei Klebeverbindungen und Schweißverbindungen schwierig sein.

Der Erfindung liegt die Aufgabe zugrunde Verbindungen zwischen faserverstärkten Bauteilen zu verbessern, vorzugsweise hinsichtlich der Lasteigenschaften im inhomogenen Lastfall.

Die Aufgabe wird durch den Gegenstand der unabhängigen Ansprüche gelöst. Bevorzugte Weiterbildungen sind Gegenstand der abhängigen Ansprüche.

Die Erfindung schafft ein Fügeverfahren zum Fügen eines, vorzugsweise faserverstärkten, ersten Bauteils, das ein erstes Polymermaterial als Matrix enthält, mit einem, vorzugsweise faserverstärkten, zweiten Bauteil, das ein zweites Polymermaterial als Matrix enthält, wobei das Verfahren umfasst:
a) Bereitstellen des ersten Bauteils;
b) Ausbilden eines Verbindungsbereichs auf dem ersten Bauteil, um eine Fügefläche an dem ersten Bauteil zu erzeugen, wobei der Verbindungsbereich aus einem oder mehreren thermoplastischen Polymermaterialen besteht und mit wenigstens einem der folgenden Merkmale ausgebildet wird:
   ba) der Verbindungsbereich wird mit einer Mehrzahl von aneinandergrenzenden Raumbereichen ausgebildet, wobei wenigstens zwei benachbarte Raumbereiche aus unterschiedlichen thermoplastischen Polymermaterialien bestehen; und/oder
   bb) der Verbindungsbereich wird mit einem Oberflächenstrukturbereich ausgebildet, der in wenigstens einer Richtung periodische Erhebungen und Vertiefungen aufweist;
c) Anordnen eines Bereichs des zweiten Bauteils in Kontakt mit der Fügefläche und Zuführen von Wärme, um den Verbindungsbereich an dem zweiten Bauteil zu fixieren, vorzugsweise unter Bildung einer Interdiffusionsschicht, um das erste Bauteil mit dem zweiten Bauteil zu fügen.

Es ist bevorzugt, dass in Schritt ba) der Verbindungsbereich mit einem ersten Raumbereich und einem zweiten Raumbereich ausgebildet wird.

Es ist bevorzugt, dass der erste Raumbereich aus dem ersten Polymermaterial besteht und der zweite Raumbereich aus einem von dem ersten Polymermaterial verschiedenen thermoplastischen Polymermaterial besteht.

Es ist bevorzugt, dass der erste Raumbereich Kurzfasern und/oder Endlosfasern enthält. Es ist bevorzugt, dass der zweite Raumbereich Kurzfasern und/oder Endlosfasern enthält.

Es ist bevorzugt, dass der erste Raumbereich und der zweite Raumbereich in einer zur Fügefläche parallelen flächigen Schicht des Verbindungsbereichs benachbart ausgebildet werden. Es ist bevorzugt, dass der erste Raumbereich und der zweite Raumbereich in einer normal zu der Fügefläche verlaufenden Dickenrichtung des Verbindungsbereichs benachbart ausgebildet werden.

Es ist bevorzugt, dass in Schritt ba) der Verbindungsbereich mit einer Mehrzahl von ersten und zweiten Raumbereichen ausgebildet wird. Es ist bevorzugt, dass in einer normal zu der Fügefläche verlaufenden Dickenrichtung betrachtet die Ausdehnung der ersten Raumbereiche mit größer werdendem Abstand von dem ersten Bauteil allmählich abnimmt während die Ausdehnung der zweiten Raumbereiche allmählich zunimmt. Es ist bevorzugt, dass die ersten und zweiten Raumbereiche in der Dickenrichtung im Wechsel angeordnet sind. Es ist bevorzugt, dass die ersten und zweiten Raumbereiche eine zellulare Struktur und/oder wellenförmige Struktur bilden. Es ist bevorzugt, dass die ersten und zweiten Raumbereiche derart ausgebildet und angeordnet sind, dass in Dickenrichtung ein allmählicher Übergang von dem ersten Polymermaterial zu dem Polymermaterial beziehungsweise zu den Polymermaterialen erfolgt, die der Verbindungsbereich enthält.

Es ist bevorzugt, dass die Fasern in dem ersten Raumbereich mehrheitlich in einer ersten Richtung verlaufen und die Fasern in dem zweiten Raumbereich mehrheitlich in einer zweiten Richtung verlaufen, die verschieden von, bevorzugt orthogonal zu, der ersten Richtung ist.

Es ist bevorzugt, dass in Schritt ba) ein Raumbereich als ein Kernbereich des Verbindungsbereichs ausgebildet wird, wobei der Kernbereich derart angeordnet ist, dass der Kernbereich lediglich die Bauteile und benachbarte Raumbereiche erfasst. Vorzugsweise ist der erste Raumbereich und/oder der zweite Raumbereich ein Kernbereich. Es ist bevorzugt, dass der Kernbereich aus einem, vorzugsweise faserverstärkten, thermoplastischen Polymermaterial besteht.

Es ist bevorzugt, dass in Schritt ba) ein Raumbereich als ein äußerer Randbereich des Verbindungsbereichs ausgebildet wird, wobei der äußere Randbereich derart angeordnet ist, dass der äußere Randbereich sich entlang eines Umfangs des Verbindungsbereichs erstreckt und lediglich die Bauteile und den Kernbereich erfasst. Vorzugsweise ist der erste Raumbereich und/oder der zweite Raumbereich ein äußerer Randbereich. Es ist bevorzugt, dass der äußere Randbereich aus einem, vorzugsweise unverstärkten, thermoplastischen Polymermaterial besteht. Es ist bevorzugt, dass der äußere Randbereich eine geringere Schmelztemperatur als das Material des Kernbereichs aufweist.

Es ist bevorzugt, dass in Schritt ba) ein Raumbereich als ein Zwischenbereich des Verbindungsbereichs ausgebildet wird, wobei der Zwischenbereich zwischen dem äußeren Randbereich und dem Kernbereich angeordnet ist. Vorzugsweise ist der erste Raumbereich und/oder der zweite Raumbereich der Zwischenbereich. Es ist bevorzugt, dass der Zwischenbereich aus einem, vorzugsweise unverstärkten, thermoplastischen Polymermaterial besteht. Es ist bevorzugt, dass das Polymermaterial identisch zu dem Polymermaterial des Kernbereichs ist. Es ist bevorzugt, dass das Polymermaterial verschieden von dem Polymermaterial des äußeren Randbereichs ist. Es ist bevorzugt, dass das Polymermaterial eine höhere Schmelztemperatur als das Material des äußeren Randbereichs aufweist.

Es ist bevorzugt, dass in Schritt ba) der Oberflächenstrukturbereich auf einer der Fügefläche abgewandten Seite des Verbindungsbereichs ausgebildet wird. Es ist bevorzugt, dass in Schritt ba) der Oberflächenstrukturbereich in einer Ebene parallel zu der Fügefläche mit Erhebungen und Vertiefungen, die vorzugsweise wellenförmig gestaltet sind, und/oder einem Riffel- oder Zackenmuster ausgebildet sind. Es ist bevorzugt, dass in Schritt ba) der Oberflächenstrukturberich derart ausgebildet wird, das in einer Ebene parallel zu der Fügefläche ein Formschluss zwischen dem Verbindungsbereich und dem ersten Bauteil gebildet ist.

Es ist bevorzugt, dass das erste Polymermaterial ein thermoplastisches Polymermaterial oder ein duromeres Polymermaterial ist. Es ist bevorzugt, dass das zweite Polymermaterial ein duromeres Polymermaterial ist. Es ist bevorzugt, dass der Verbindungsbereich ein Polymaterial enthält, das vorzugsweise eine niedrigere Schmelztemperatur als das erste Polymermaterial aufweist.

Es ist bevorzugt, dass Schritt a) und Schritt ba) mittels additiver Fertigung erfolgen. Es ist bevorzugt, dass Schritt a) und Schritt ba) mittels additiver Fertigung derart erfolgen, dass zunächst der Verbindungsbereich gefertigt wird und anschließend das erste Bauteil gefertigt wird.

Die Erfindung schafft ferner eine Baugruppe, vorzugsweise für ein Luftfahrzeug, erhältlich durch Anwendung eines zuvor beschriebenen Fügeverfahrens.

Eine Idee ist es Bauteile aus Verbundwerkstoffen, die unterschiedliche Matrixsysteme aufweisen, miteinander zu fügen. Typische Bauteile im Bereich der Luftfahrt sind etwa Klammern, Clips, Befestigungsösen, Stringer, Spanten, Häute und dergleichen. Wie bei den herkömmlichen Verfahren sind Gewicht, Zulassung, Fertigungsaufwand, Fertigungswiederholbarkeit, Schadenstoleranz, Lastkapazität und dergleichen zu beachten. Diese Aspekte können durch die Erfindung verbessert werden.

Beispielsweise können sogenannte "kissing bonds" durch Interdiffusionsverbindungen vermieden werden. Zusätzlich kommt bei der Erfindung hinzu, dass die herkömmlichen Verfahren eine homogene Verbindung, etwa durch homogene Materialeigenschaften und -geometrien, an Stellen erzeugen, die allgemein inhomogen belastet sind. So kann die Dehnung in den Substraten zu lokalen Spannungsüberhöhungen in den Randbereichen oder Schällasten durch außermittige Belastung führen.

Ein Vorschlag ist es, die Interdiffusion von mehreren Materialien zu benutzen, was als Multi-Material Interdiffusion Joining (M²IDJ) bezeichnet werden kann. Diese Art der Verbindung kann vorzugsweise durch additive Fertigung mittels Filamentschichtfertigung (engl. filament layer manufacturing, FLM) erzeugt werden. Die Verbindung erlaubt eine erhöhte Lastkapazität und Schadenstoleranz. Gleichzeitig kann das Strukturgewicht und der Fertigungsaufwand verringert werden.

Die Verwendung mehrerer Materialen und die überlegenen Fähigkeiten des 3D-Drucks nahezu beliebige Geometrien zu verwirklichen erlaubt es die Struktur der Verbindungsbereiche und Interdiffusionszonen vorab an die erwarteten Lastszenarien anzupassen. M²IDJ kann einerseits auf die herkömmliche Filmgeometrie angewandt werden oder zum Verbinden von 3D-gedruckten thermoplastischen Bauteilen mit duromeren Bauteilen.

Zur Anpassung können unter anderem folgende Parameter variiert werden:
- Thermoplaste mit unterschiedlicher Löslichkeit in der Duromermatrix
- Thermoplaste mit unterschiedlicher Werkstofffestigkeit und -steifigkeit
- Thermoplaste mit hoher/niedriger Bruchzähigkeit
- Mikroadditive (Partikel) und Makroadditive (Fasern)
- Werkstoffverbindungszonenarchitektur (Werkstoffdesign, Filmdicke, Porosität, Produktionsweg, Neuausrichtung von Additiven)

Typischerweise verwendete Thermoplaste sind Hochleistungs-Thermoplaste, z. B. Polyaryletherketone (PAEK), wie etwa Polyetheretherketon (PEEK) und Polyetherketonketon (PEKK). Thermoplaste mit niedrigerer Schmelztemperatur sind etwa Polyetherimide (PEI), Blends aus PEI und Polycarbonat (PC), thermoplastisches Polyurethan (TPU) sowie Polyamide. Typische Duromersysteme sind etwa Epoxidharze. Vorzugsweise können die Thermoplaste Füllmaterial enthalten, beispielsweise Partikel oder Fasern (sowohl Kurzfasern als auch Endlosfasern).

Die Anpassung der Verbindung an Scherung, Schälung, Reißen, Spaltung und dergleichen kann auf unterschiedliche Arten erfolgen. Bei inhomogener Fugenbelastung, wie etwa Scherung, Schälung, Spaltung, kann eine Anpassung des maßgeblichen Moduls erfolgen. So können für derartige Beanspruchungen Additive (z.B. Fasern, Partikel) in das Thermoplast eingebettet werden, um beispielsweise den Schermodul in Richtung der erwarteten Belastung zu vergrößern. Die Fasern können dabei in unterschiedliche Vorzugsrichtungen verlaufen. Denkbar ist auch Verwendung einer vorzugsweise strukturierten Multi-Matrix.

Eine weitere Anpassungsmöglichkeit ist eine Kantenertüchtigung, bei der beispielsweise in einem Randbereich des Verbindungsbereichs die Faserausrichtung angepasst, lediglich die Reinmatrix oder eine zähere Matrix aufgetragen wird.

Eine weitere Maßnahme kann es sein, lokal zähe Partikel/Linien/Muster aufzubringen, mit dem Ziel Risse zu überbrücken. Weiters können Poren geschaffen werden oder schlecht angebundene Fasern, um Risse zu pinnen. Die Poren können auch als Rissstopper fungieren. Eine weitere Idee ist es, lokal eine zähe Matrix mit Anbindung an die Hauptmatrix vorzusehen, um den Risspfad abzulenken. Eine bevorzugte Ausgestaltung kann Mikropartikel oder andere Additive enthalten - beispielsweise Gummipartikel oder TPU - um Scherkräfte aufzuteilen und dadurch zu senken. Noch eine Ausgestaltung kann Hochmodulige Additive, wie Graphit, Kohlenstoffnanoröhrchen oder Ruß, zur Verhinderung von Mikrorissen enthalten.

Eine weitere Idee ist es, hochzähe lokale Phasen aus Thermoplast mit einer Schmelztemperatur unterhalb der Infusionstemperatur zwecks Anbindung an Textile Teile bzw. Preforms vorzusehen. Desweiteren kann eine Perforation in dem Verbindungsbereich vorgesehen sein als Infusionshilfe.

Zur Anbindung artfremder Polymere kann eine Übergangsphase bzw. ein Übergangsbereich in dem Verbindungsbereich ausgebildet werden. Idealerweise weist der Übergang eine graduelle zellulare Geometrie auf. Auch Überkreuzungen zwischen unterschiedlichen Materialphasen ist möglich. Beispielsweise kann zunächst PEI als Verbindungsbereich ausgedruckt werden und anschließend PEEK für das eigentliche Bauteil. Dabei können die beiden Materialien aufgrund der höheren Schmelztemperatur des PEEK lokal verschmelzen.

Eine weitere Idee ist es, den Verbindungsbereich mit einer Oberflächenstruktur zu versehen mittels der der Verbindungsbereich an das Bauteil angebunden wird, während die Fügefläche glatt bleibt. Die Oberflächenstruktur kann vorteilhaft mittels additiver Fertigung erzeugt werden.

Ausführungsbeispiele werden anhand der beigefügten schematischen Zeichnungen näher erläutert. Darin zeigt:
- Fig. 1 bis Fig. 8: Ausführungsbeispiele einer Baugruppe;
- Fig. 9: Detailansichten (a) bis (f) unterschiedlicher Beispiele von Verbindungsbereichen; und
- Fig. 10 bis Fig. 13: ein Ausführungsbeispiel eines Fügeverfahrens.

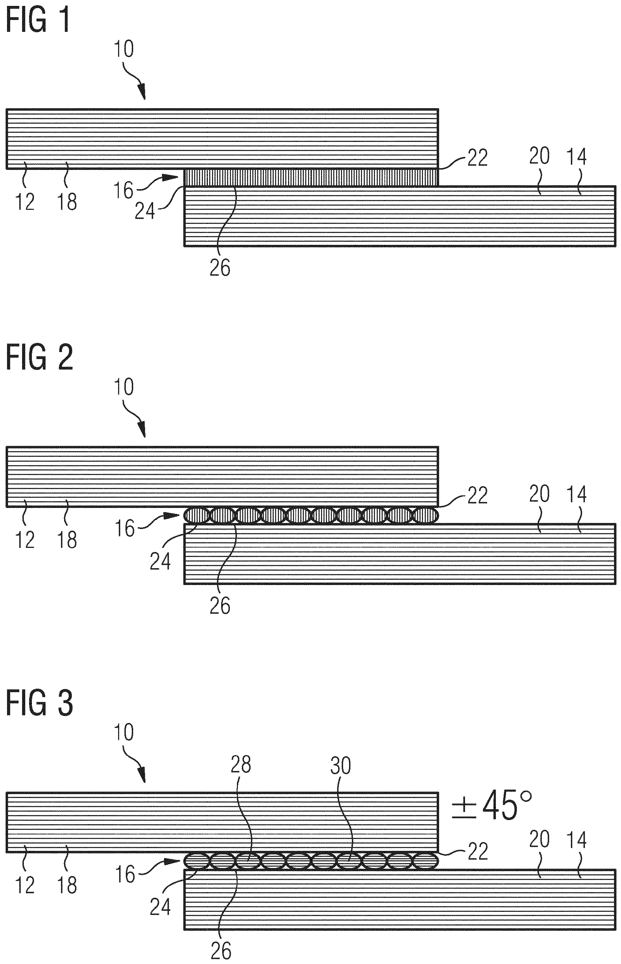

Es wird zunächst auf die Fig. 1 Bezug genommen, die eine Baugruppe 10 zeigt. Die Baugruppe 10 umfasst ein erstes Bauteil 12 und ein zweites Bauteil 14, die über einen Verbindungsbereich 16 miteinander verbunden sind.

Die Baugruppe 10 ist beispielsweise für ein Luftfahrzeug bestimmt. Das erste Bauteil 12 kann ein Verstärkungsbauteil, wie etwa ein Stringer sein. Das zweite Bauteil 14 kann ein Rumpfbauteil sein, etwa eine Außenhaut, die durch das erste Bauteil 12 verstärkt werden soll.

Das erste Bauteil 12 ist ein faserverstärktes Bauteil, das eine Matrix aus einem ersten Polymermaterial 18 enthält. Das erste Polymermaterial 18 ist ausgewählt aus der Gruppe der Polyaryletherketone, beispielsweise PEEK.

Das zweite Bauteil 14 ist ein faserverstärktes Bauteil, das eine Matrix aus einem duromeren zweiten Polymermaterial 20 enthält. Das zweite Polymermaterial 20 ist beispielsweise Epoxidharz.

Der Verbindungsbereich 16 besteht aus einem thermoplastischen Polymermaterial, beispielsweise PEI. Der Verbindungsbereich 16 kann als Film oder als Folie ausgebildet sein.

Das erste Bauteil 12 und der Verbindungsbereich 16 sind an einer Schmelzschicht 22 miteinander verschmolzen. Dies kann zum Beispiel dadurch erreicht werden, dass das erste Bauteil 12 auf dem Verbindungsbereich 16 additiv gefertigt wird.

Der Verbindungsbereich 16 hat ferner eine Fügefläche 24, die vorzugsweise der Schmelzschicht 22 gegenüberliegt.

Das zweite Bauteil 14 wird mit einem Bereich in Kontakt mit der Fügefläche 24 angeordnet. In diesem Zustand ist das zweite Polymermaterial 20 noch im aushärtbaren Zustand. Sodann wird Wärme zugeführt, um das erste Polymermaterial 18 über dessen Glasübergangstemperatur zu erwärmen und das Aushärten des zweiten Polymermaterials 20 zu aktivieren. Dabei entsteht eine Interdiffusionsschicht 26 zwischen dem zweiten Bauteil 14 und dem Verbindungsbereich 16. Der Verbindungsbereich 16 ist dann an dem zweiten Bauteil 14 fixiert, sodass insgesamt das erste Bauteil 12 und das zweite Bauteil 14 zu der Baugruppe 10 gefügt worden sind.

Die weiteren Ausführungsbeispiele werden lediglich insoweit erläutert, als sie sich von dem zuvor beschriebenen Beispiel unterscheiden.

Wie in Fig. 2 angedeutet, wird der Verbindungsbereich 16 ähnlich wie das erste Bauteil 12 durch additive Fertigung erzeugt. In der Reihenfolge wird zunächst der Verbindungsbereich 16 erzeugt und sodann das erste Bauteil 12 auf dem Verbindungsbereich 16 aufgebaut. Anschließend wird wie zuvor beschrieben verfahren.

Fig. 3 zeigt einen Verbindungsbereich 16, der aus einem faserverstärkten thermoplastischen ersten Polymermaterial 18, beispielsweise faserverstärktes PEI, additiv gefertigt wird. Die Fasern sind beispielsweise Endlosfasern und können im +45° und -45° Winkel angeordnet sein.

Es ist auch möglich, dass der Verbindungsbereich 16 mehr als eine Schicht enthält mit jeweils wechselnder Faserrichtung von Schicht zu Schicht. Demnach weist der Verbindungsbereich 16 einen ersten Raumbereich 28 mit einer ersten Faserrichtung und einen zweiten Raumbereich 30 mit einer zweiten Faserrichtung auf, die zu der ersten Faserrichtung orthogonal sein kann. Anschließend wird wie zuvor beschrieben verfahren.

Es sollte beachtet werden, dass der zweite Raumbereich 30 im Vergleich zu dem ersten Raumbereich 28 als aus unterschiedlichem Polymermaterial bestehend angesehen wird, weil die Fasern in anderer Richtung verlaufen.

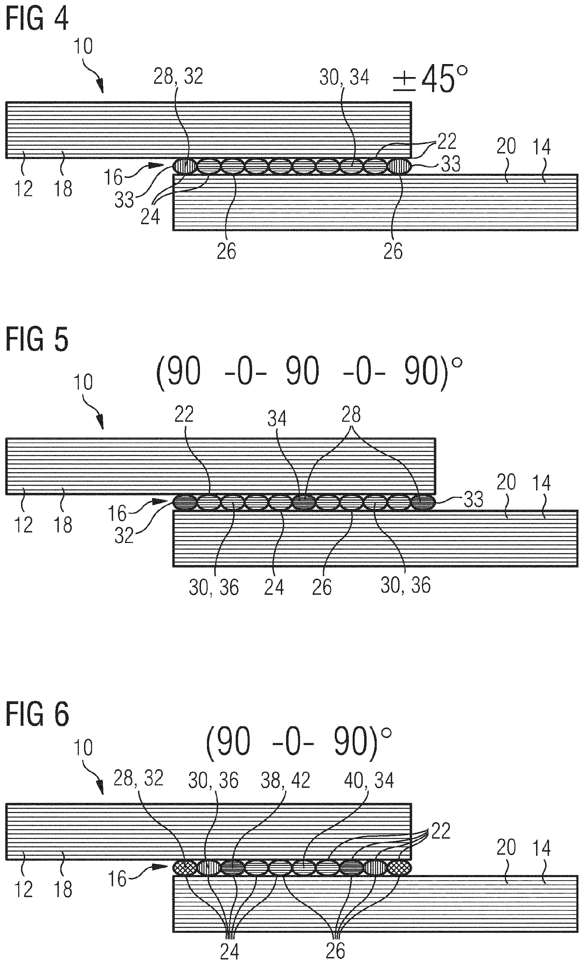

Fig. 4 zeigt einen Verbindungsbereich 16, der additiv gefertigt wird. Der Verbindungsbereich 16 enthält einen ersten Raumbereich 28 und einen zweiten Raumbereich 30.

Der erste Raumbereich 28 ist als äußerer Randbereich 32 ausgebildet. Der äußere Randbereich 32 hat eine freiliegenden Seite 33. Der äußere Randbereich 32 besteht beispielsweise aus unverstärktem Thermoplast, wie PEI.

Der zweite Raumbereich 30 ist als Kernbereich 34 ausgebildet. Der Kernbereich 34 grenzt an den äußeren Randbereich 32, das erste Bauteil 12 sowie das zweite Bauteil 14. Der Kernbereich 34 besteht beispielsweise aus faserverstärktem Thermoplast, wie PEI. Der Kernbereich 34 kann unterschiedliche Faserrichtungen aufweisen, wie zuvor beschrieben.

Fig. 5 zeigt einen Verbindungsbereich 16, der additiv gefertigt wird. Der Verbindungsbereich 16 enthält einen ersten Raumbereich 28 und einen zweiten Raumbereich 30.

Der erste Raumbereich 28 ist als äußerer Randbereich 32 und als Kernbereich 34 ausgebildet. Der erste Raumbereich 28 besteht beispielsweise aus einem faserverstärkten Thermoplast wie PEI, wobei die Fasern relativ zu dem ersten Bauteil 12 oder dem zweiten Bauteil 14 im 90°-Winkel verlaufen.

Der zweite Raumbereich 30 ist als Zwischenbereich 36 ausgebildet, der zwischen dem äußeren Randbereich 32 und dem Kernbereich 34 angeordnet ist. Der zweite Raumbereich 30 besteht beispielsweise aus einem faserverstärkten Thermoplast wie PEI.

Anders als beim ersten Raumbereich 28 verlaufen die Fasern in einem 0°-Winkel. Es sollte beachtet werden, dass der zweite Raumbereich 30 im Vergleich zu dem ersten Raumbereich 28 als aus unterschiedlichem Polymermaterial bestehend angesehen wird, weil die Fasern in anderer Richtung verlaufen.

Fig. 6 zeigt einen Verbindungsbereich 16, der additiv gefertigt wird. Der Verbindungsbereich 16 enthält einen ersten Raumbereich 28, einen zweiten Raumbereich 30, einen dritten Raumbereich 38 und einen vierten Raumbereich 40.

Der erste Raumbereich 28 ist als äußerer Randbereich 32 ausgebildet. Der äußere Randbereich 32 besteht aus einem unverstärkten thermoplastischen Polymermaterial, beispielsweise Polyamid oder thermoplastisches Polyurethan, wobei das Polymermaterial eine niedrige Schmelztemperatur aufweist.

Der zweite Raumbereich 30 ist als Zwischenbereich 36 ausgebildet. Der Zwischenbereich 36 besteht aus einem unverstärkten thermoplastischen Polymermaterial wie PEI. Der Zwischenbereich 36 weist eine höhere Schmelztemperatur als der äußere Randbereich 32 auf.

Der dritte Raumbereich 38 ist als weiterer Zwischenbereich 42 ausgebildet, der zwischen dem Zwischenbereich 36 und dem Kernbereich 34 angeordnet ist. Der weitere Zwischenbereich 42 besteht aus einem faserverstärkten thermoplastischen Polymermaterial wie PEI, bei dem die Fasern im 90°-Winkel verlaufen.

Der vierte Raumbereich 40 ist als Kernbereich 34 ausgebildet. Der Kernbereich 34 besteht aus einem faserverstärkten thermoplastischen Polymermaterial wie PEI, bei dem die Fasern im 0°-Winkel verlaufen.

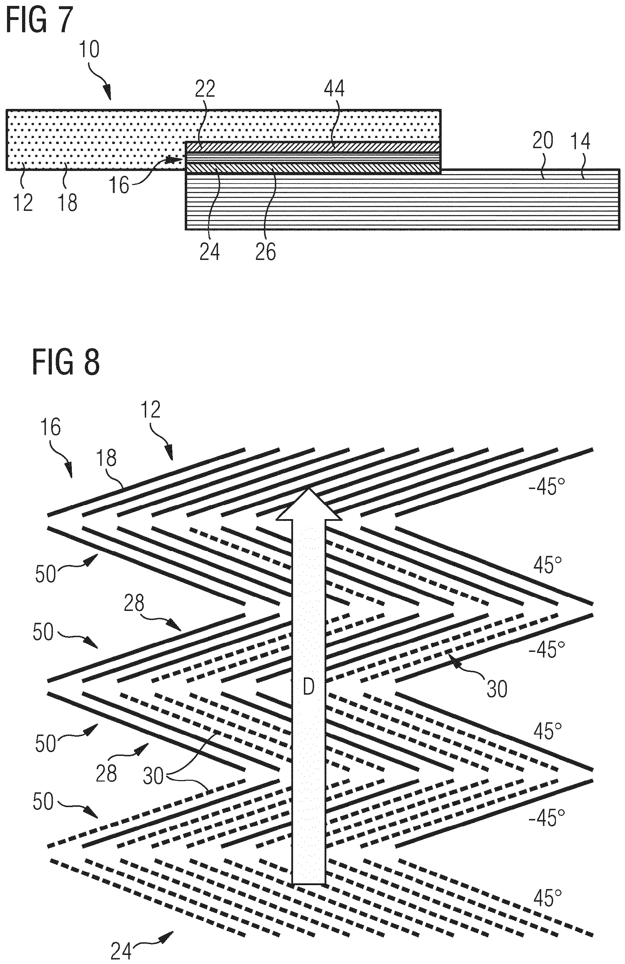

Fig. 7 zeigt einen Verbindungsbereich 16, der additiv gefertigt wird. Der Verbindungsbereich 16 wird mit einem Oberflächenstrukturbereich 44 ausgebildet, auf dem die Schmelzschicht 22 gebildet wird. Der Oberflächenstrukturbereich 44 wird so strukturiert, dass ein Formschluss in einer Ebene parallel zu der Fügefläche 24 erzeugt wird. Der Oberflächenstrukturbereich 44 kann periodisch wechselnde Erhebungen 46 und Vertiefungen 48 aufweisen. Der Oberflächenstrukturbereich 44 kann wellenförmig, mit einem Rillen- oder Zackenmuster und/oder dergleichen ausgebildet werden.

Fig. 8 zeigt einen Verbindungsbereich 16, der additiv gefertigt wird. Der Verbindungsbereich 16 wird so ausgebildet, dass in Dickenrichtung D ein allmählicher Übergang zwischen dem Polymermaterial des Verbindungsbereichs 16 und dem ersten Polymermaterial 18 erfolgt. Beispielsweise werden eine Mehrzahl von Polymerschichten 50 erzeugt, wobei der Anteil an Polymerlinien aus dem ersten Polymermaterial 18 Schicht für Schicht zunimmt. Durch die verschiedenen Polymerlinien entsteht der erste Raumbereich 28 und der zweite Raumbereich 30.

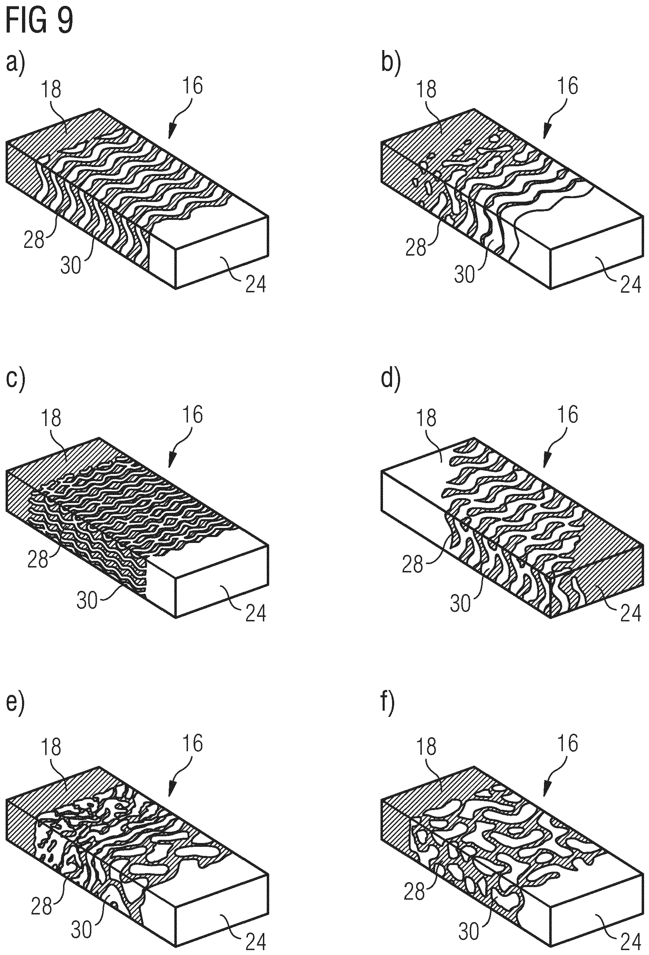

Fig. 9 zeigt weitere Beispiele für eine derartiges System aus Polymerschichten 50 mit dem ersten Raumbereich 28 und dem zweiten Raumbereich 30. Der Übergang kann als zellulare Struktur oder periodisch im Wechsel angeordnete Bereich ausgestaltet sein, wie sie in Fig. 9 dargestellt sind.

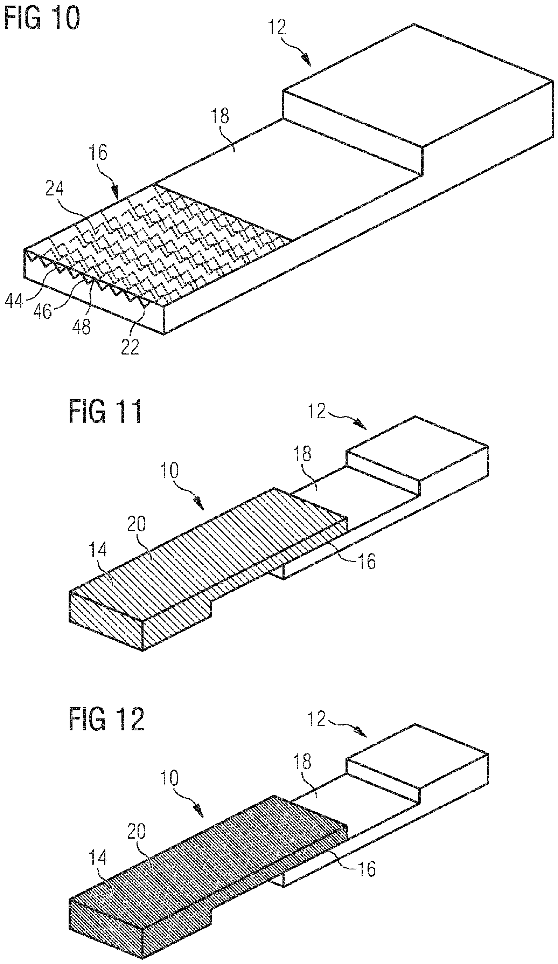

Mit Bezug auf Fig. 10 bis Fig. 12 wird das Fügeverfahren erläutert. Zunächst wird das erste Bauteil 12 mit dem Verbindungsbereich 16 bereitgestellt. Die Bereitstellung kann dadurch erfolgen, dass das erste Bauteil 12 und der Verbindungsbereich 16 additiv gefertigt werden. Vorzugsweise wird der Verbindungsbereich 16 zuerst gefertigt oder gleichzeitig mit dem ersten Bauteil 12. Der Verbindungsbereich 16 wird in irgendeiner oder einer sinnvollen Kombination der zuvor beschriebenen Beispiele ausgebildet.

Mit Blick auf Fig. 11 wird das zweite Bauteil 14 in unausgehärtetem Zustand mit einem Bereich mit der Fügefläche 24 in Kontakt gebracht. Das zweite Bauteil 14 kann ein textiles Preform, ein Kohlenstofffaserverstärktes Kunststoffteil oder dergleichen sein. Sofern erforderlich wird das zweite Bauteil 14 in dieser Position infundiert.

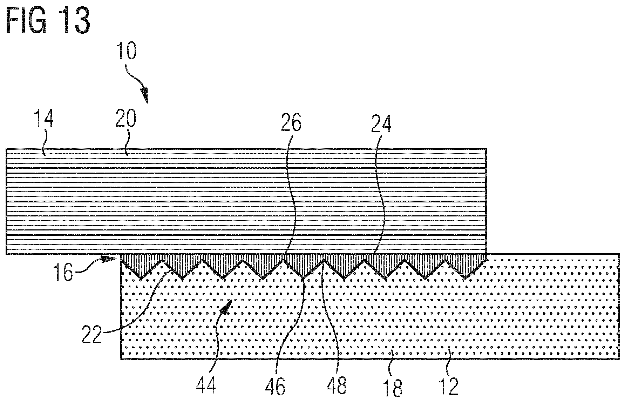

Anschließend wird, wie in Fig. 12 dargestellt, die Baugruppe 10 fertiggestellt durch Zufur von Wärme. Das erste Bauteil 12 ist sodann mit dem zweiten Bauteil 14 zu der Baugruppe 10 gefügt, die in Fig. 13 schematisch dargestellt ist.

Zum Verbessern der Charakteristika oder ermöglichen von bislang unmöglichen Verbindungen zwischen thermoplastischen und duromeren Bauteilen 12, 14 wird ein Multi-Material-Fügeverfahren vorgeschlagen, bei dem ein thermoplastischer Verbindungsbereich 16 auf dem thermoplastischen Bauteil 12 ausgebildet wird. Der Verbindungsbereich 16 wird mittels Interdiffusion an das duromere Bauteil 14 angeschlossen. Dafür wird das noch unausgehärtete zweite Bauteil 14 mit dem Verbindungsbereich 16 in Kontakt gebracht und Wärme zugeführt. Es entsteht eine Interdiffusionsschicht 26, die das zweite Bauteil 14 und den Verbindungsbereich 16 fest miteinander verbindet und damit das erste Bauteil 12 mit dem zweiten Bauteil 14 fügt.

### Bezugszeichenliste:

- 10: Baugruppe
- 12: erstes Bauteil
- 14: zweites Bauteil
- 16: Verbindungsbereich
- 18: erstes Polymermaterial
- 20: zweites Polymermaterial
- 22: Schmelzschicht
- 24: Fügefläche
- 26: Interdiffusionsschicht
- 28: erster Raumbereich
- 30: zweiter Raumbereich
- 32: äußerer Randbereich
- 33: freiliegende Seite
- 34: Kernbereich
- 36: Zwischenbereich
- 38: dritter Raumbereich
- 40: vierter Raumbereich
- 42: weiterer Zwischenbereich
- 44: Oberflächenstrukturbereich
- 46: Erhebung
- 48: Vertiefung
- 50: Polymerschicht

- D: Dickenrichtung

## Patentansprüche

1. Fügeverfahren zum Fügen eines, vorzugsweise faserverstärkten, ersten Bauteils (12), das ein erstes Polymermaterial (18) als Matrix enthält, mit einem faserverstärkten, zweiten Bauteil (14), das ein aushärtbares duromeres zweites Polymermaterial (20) als Matrix enthält, wobei das Verfahren umfasst:
a) Bereitstellen des ersten Bauteils (12);
b) Ausbilden eines Verbindungsbereichs (16) auf dem ersten Bauteil (12), um eine Fügefläche (24) an dem ersten Bauteil (12) zu erzeugen, wobei der Verbindungsbereich (16) aus einem oder mehreren thermoplastischen Polymermaterialen besteht und mit wenigstens einem der folgenden Merkmale ausgebildet wird:
ba) der Verbindungsbereich (16) wird mit einer Mehrzahl von aneinandergrenzenden Raumbereichen (28, 30, 38, 40) ausgebildet, wobei jeweils zwei benachbarte Raumbereiche aus unterschiedlichen thermoplastischen Polymermaterialien bestehen; und/oder
bb) der Verbindungsbereich (16) wird mit einem Oberflächenstrukturbereich (44) ausgebildet, der in wenigstens einer Richtung periodische Erhebungen (46) und Vertiefungen (48) aufweist;
c) Anordnen eines Bereichs des zweiten Bauteils (14) in Kontakt mit der Fügefläche (24) und Zuführen von Wärme, um den Verbindungsbereich (16) an dem zweiten Bauteil (14) unter Aushärten des zweiten Polymermaterials (20) zu fixieren, um das erste Bauteil (12) mit dem zweiten Bauteil (14) zu fügen.

2. Fügeverfahren nach Anspruch 1, **dadurch gekennzeichnet, dass** in Schritt ba) der Verbindungsbereich (16) mit einem ersten Raumbereich (28) und einem zweiten Raumbereich (30) ausgebildet wird,
- wobei der erste Raumbereich (28) aus dem ersten Polymermaterial (18) besteht und der zweite Raumbereich (30) aus einem von dem ersten Polymermaterial (18) verschiedenen thermoplastischen Polymermaterial besteht; und/oder
- wobei der erste Raumbereich (28) und/oder der zweite Raumbereich (30) Kurzfasern und/oder Endlosfasern enthalten; und/oder
- wobei der erste Raumbereich (28) und der zweite Raumbereich (30) in einer zur Fügefläche (24) parallelen flächigen Schicht des Verbindungsbereichs (16) benachbart ausgebildet werden; und/oder
- wobei der erste Raumbereich (28) und der zweite Raumbereich (30) in einer normal zu der Fügefläche (24) verlaufenden Dickenrichtung (D) des Verbindungsbereichs (16) benachbart ausgebildet werden.

3. Fügeverfahren nach Anspruch 2, **dadurch gekennzeichnet, dass** in Schritt ba) der Verbindungsbereich (16) mit einer Mehrzahl von ersten und zweiten Raumbereichen (28, 30) ausgebildet wird,
- wobei in einer normal zu der Fügefläche (24) verlaufenden Dickenrichtung (D) betrachtet die Ausdehnung der ersten Raumbereiche (28) mit größer werdendem Abstand von dem ersten Bauteil (12) allmählich abnimmt während die Ausdehnung der zweiten Raumbereiche (30) allmählich zunimmt; und/oder
- wobei die ersten und zweiten Raumbereiche (28, 30) in der Dickenrichtung (D) im Wechsel angeordnet sind; und/oder
- wobei die ersten und zweiten Raumbereiche (28, 30) eine zellulare Struktur und/oder wellenförmige Struktur bilden; und/oder
- wobei die ersten und zweiten Raumbereiche (28, 30) derart ausgebildet und angeordnet sind, dass in Dickenrichtung (D) ein allmählicher Übergang von dem ersten Polymermaterial (18) zu dem Polymermaterial beziehungsweise zu den Polymermaterialen erfolgt, die der Verbindungsbereich (16) enthält.

4. Fügeverfahren nach einem der vorhergehenden Ansprüche, **dadurch gekennzeichnet, dass** die Fasern in dem ersten Raumbereich (28) mehrheitlich in einer ersten Richtung verlaufen und die Fasern in dem zweiten Raumbereich (30) mehrheitlich in einer zweiten Richtung verlaufen, die verschieden von, bevorzugt orthogonal zu, der ersten Richtung ist.

5. Fügeverfahren nach einem der vorhergehenden Ansprüche, **dadurch gekennzeichnet, dass** in Schritt ba) ein Raumbereich als ein Kernbereich (34) des Verbindungsbereichs (16) ausgebildet wird, wobei der Kernbereich (34) derart angeordnet ist, dass der Kernbereich (34) lediglich die Bauteile und benachbarte Raumbereiche erfasst.

6. Fügeverfahren nach Anspruch 5, **dadurch gekennzeichnet, dass** der Kernbereich (34) aus einem, vorzugsweise faserverstärkten, thermoplastischen Polymermaterial besteht.

7. Fügeverfahren nach einem der vorhergehenden Ansprüche, **dadurch gekennzeichnet, dass** in Schritt ba) ein Raumbereich als ein äußerer Randbereich (32) des Verbindungsbereichs (16) ausgebildet wird, wobei der äußere Randbereich (32) derart angeordnet ist, dass der äußere Randbereich (32) sich entlang eines Umfangs des Verbindungsbereichs (16) erstreckt und lediglich die Bauteile (12, 14) und den Kernbereich (34) erfasst.

8. Fügeverfahren nach Anspruch 7, **dadurch gekennzeichnet, dass**
- der äußere Randbereich (32) aus einem, vorzugsweise unverstärkten, thermoplastischen Polymermaterial besteht; und/oder
- dass der äußere Randbereich (32) eine geringere Schmelztemperatur als das Material des Kernbereichs (34) aufweist.

9. Fügeverfahren nach einem der Ansprüche 5 bis 8, **dadurch gekennzeichnet, dass** in Schritt ba) ein Raumbereich als ein Zwischenbereich (36, 42) des Verbindungsbereichs (16) ausgebildet wird, wobei der Zwischenbereich (36, 42) zwischen dem äußeren Randbereich (32) und dem Kernbereich (34) angeordnet ist.

10. Fügeverfahren nach Anspruch 9, **dadurch gekennzeichnet, dass** der Zwischenbereich (36, 42) aus einem, vorzugsweise unverstärkten, thermoplastischen Polymermaterial besteht, das vorzugsweise mit Ausnahme der Fasererichtung identisch zu dem Polymermaterial des Kernbereichs (34) ist und/oder das unterschiedlich von dem Polymermaterial des äußeren Randbereichs (32) ist und/oder das eine höhere Schmelztemperatur als das Material des äußeren Randbereichs (32) aufweist.

11. Fügeverfahren nach einem der vorhergehenden Ansprüche, **dadurch gekennzeichnet, dass** in Schritt ba):
- der Oberflächenstrukturbereich (44) auf einer der Fügefläche (24) abgewandten Seite des Verbindungsbereichs (16) ausgebildet wird; und/oder
- der Oberflächenstrukturbereich (44) in einer Ebene parallel zu der Fügefläche (24) mit Erhebungen (46) und Vertiefungen (48), die vorzugsweise wellenförmig gestaltet sind, und/oder einem Riffel- oder Zackenmuster ausgebildet sind.

12. Fügeverfahren nach einem der vorhergehenden Ansprüche, **dadurch gekennzeichnet, dass** in Schritt ba) der Oberflächenstrukturbereich (44) derart ausgebildet wird, das in einer Ebene parallel zu der Fügefläche (24) ein Formschluss zwischen dem Verbindungsbereich (16) und dem ersten Bauteil (12) gebildet ist.

13. Fügeverfahren nach einem der vorhergehenden Ansprüche, **dadurch gekennzeichnet,**
- **dass** das erste Polymermaterial (18) ein thermoplastisches Polymermaterial oder ein duromeres Polymermaterial ist; und/oder
- **dass** der Verbindungsbereich (16) ein Polymaterial enthält, das vorzugsweise eine niedrigere Schmelztemperatur als das erste Polymermaterial (18) aufweist.

14. Fügeverfahren nach einem der vorhergehenden Ansprüche, **dadurch gekennzeichnet, dass** Schritt a) und Schritt ba) mittels additiver Fertigung derart erfolgen, dass zunächst der Verbindungsbereich (16) gefertigt wird und anschließend das erste Bauteil (12) gefertigt wird.

15. Baugruppe (10), vorzugsweise für ein Luftfahrzeug, erhältlich durch Anwendung des Fügeverfahrens nach einem der vorhergehenden Ansprüche.
